# EUROPEAN PATENT APPLICATION

(11) **EP 0 680 939 A1**
(43) Date of publication of application: **08.11.1995**
(21) Application number: 95500061.7
(22) Date of filing: 26.04.1995
(51) Int. Cl.: C04B 35/638, C04B 35/634

(54) **Process to obtain green compacts for later sintering**

(30) Priority: 27.04.1994 ES 9400884
(71) Applicant: INDUSTRIAS QUIMICAS DEL URUMEA, S.A., 20120 Hernani (Guipuzcoa) (ES)
(72) Inventor: Iglesias Hernandez, Luis, E-20120 Hernani ( Guipuzcoa ) (ES); Echeverria Pascual, Jose Maria, E-20120 Hernani ( Guipuzcoa ) (ES); Urkola Galarza, Jose Javier, E-20400 Tolosai ( Guipuzcoa ) (ES); Castro Fernandez, Francisco, E-20009 Donostia (ES); Jauregui Etxebeste, Sebastian, E-20003 Donostia (ES); Gonzalez Lopez, Eva, E-20017 Donostia (ES)
(74) Representative: Carpintero Lopez, Francisco

(57) **Abstract**

The process to obtain green compacts by way of the model of the mixture of ceramic and/or metal dusts and a phenolic resin; acting upon the fore mentioned phenolic resin not only as a vehicular agent but also to incorporate, in known proportions and with uniform distribution, carbon and/or nitrogen to the final compact composition.

## Description

### OBJECT OF THE INVENTION

This invention refers, as shown in this patent specification, to a process for the obtention of green compacts, later sinterizable, through molding of a mixture made up of ceramic and/or metal dusts, a phenolic resin as organic vehicle and a catalyst, in which the elimination of the organic vehicle is easily achievable and does furthermore allow the incorporation of carbon and/or nitrogen to the final compact composition.

### BACKGROUND OF THE INVENTION

In the obtention of dense parts, that is to say, free of residual porosity, be it by way of injection, extrusion of forging of the dusts, generally, the ceramic and/or metal dusts are mixed with an organic compound that acts as a vehicular agent, being said organic vehicle very often made up of a non phenolic resin.

The use of the phenolic resin proposed in the object of this invention presents a number of advantages in respect to the ones used previously, given that it does not only act as a mixture vehicular agent but does also allow the homogeneous incorporation of carbon and/or nitrogen to the initial dust mixture, acting in the benefit of the mechanical properties of the final sinterized product. This incorporation takes place in a quantity that varies depending on the chemical composition of the initial phenolic resin.

In the specific case of a mixture of metal dusts for the fabrication of self-hardening steel components, the controlled contribution of carbon and/or nitrogen through the phenolic resin does also allow a reduction of the sintering temperature in respect to that of the traditional methods.

### DESCRIPTION OF THE INVENTION

This invention refers to a process for the fabrication of green compacts through molding by deep drawing or injection of a mixture of ceramic and/or metal dusts containing a given amount of phenolic resin of defined chemical composition. This drawing process is carried out at a maximum temperature which precise value depends both on the quantity relative to the volume of the thermostable vehicle in respect to the dust load and to its own chemical composition.

Once the molding has been effected, either by classical injection methods or by deep drawing, and due to the properties of the thermostable vehicle, based on phenolic resins, the mixture hardens and allows a very easy extraction of the green compact mould. Said green compact constitutes the starting point for the fabrication of a final component through a later sintering process.

The proposed phenolic resin, of controlled chemical composition, acts not only as a vehicle, but does also serve to incorporate, depending on the specific composition of the resin prepared, a quantity of carbon to the green compact resultant following the extraction of the phenolic resin through a very slow warm up. Said carbon contribution is effected homogeneously in the resulting compact, due to the fact that the phenolic resin is prepared forming a fluid mixture with the ceramic and/or metal dusts.

Modifying the phenolic resin structure, adding nitrogenated groups, upon discomposing the resin for its extraction, there is a contribution of nitrogen to the resulting compact, homogeneously distributed throughout the resulting volume as per the carbon contribution.

### PREFERRED EMBODIMENT OF THE INVENTION

In accordance with this invention, a compacting process for the obtention of green compacts made up of a mixture of dusts and a thermostable organic vehicle subsequently subjected to a sintering process is hereby proposed. The stages of said process are as follows:
a) Preparation of the organic vehicle or phenolic resin based containing carbon and/or nitrogen in given quantities and with the addition of hexamethylenetetramine to induce the reaction and the resulting hardening of the compact following compacting.
b) Preparation of the mixture formed by the thermostable vehicle (described in paragraph a), with the ceramic and/or metal dusts. The mixture preparation is effected in a mill with the thermostable vehicle in dissolution to which a solid load is then added (ceramic and/or metal dusts) in given proportions so as to achieve the proper degree of viscosity that would allow keeping a fluid mixture at the compacting temperatures. Generally, the thermostable vehicle in said mixture is not greater than 40% of the total by volume.
c) The mixture is then molded, using the injection or deep drawing procedure, once said mixture reaches the molding temperature, that generally oscillates between 80 and 150°C, depending on the relative quantities between dusts and organic vehicle, as well as on the type of dusts used and the chemical composition of the thermostable vehicle.
d) The green compact is then taken out, as its degree of hardness, induced by the reaction between the phenolic resin and the hexamethylenetetramine, is sufficient for later handling.
e) In order to obtain a residual porosity solid component (which shape is determined by the green compact shape as previously described) a sintering treatment is now effected. Notwithstanding this, before this step is taken it is necessary to extract the organic vehicle given that the ceramic and/or metal dust sintering temperatures are much greater than those at which the organic vehicle undergoes thermal decomposition. The organic vehicle extraction process is effected thermically through a very slow warming up procedure (approximately 0.5°C per minute) up to a temperature of between 400 and 450°C in an inert temperature or at a pressure that may vary, as required, between 1 mbar and 5 mbar. In this way the organic vehicle is given off as smoke after its decomposition.
   In this stage the residues left by said organic vehicle (carbon and/or nitrogen) are left homogeneously distributed among the dust particles enriching the mixture of these elements The concentration of said elements in the mixture is determined by the chemical composition of the organic vehicle that has been expressly prepared to carry out said contribution after its extraction.
f) The green compact so obtained is now subjected to a sintering treatment at a given temperature and time period so as to induce the required level of density. The sintering of these compacts may be effected either by traditional methods (presureless sintering) or alternatively through a sinter-hip process (sintering followed by the application of pressure in the same process after having reached a given density), or alternatively through hip (hot isostatic compacting).

## Claims

**1.-** Process for the obtention of green compacts for itslater sintering, characterized by its starting off a fluid initial mixture, made up of ceramic and/or metal dusts, a controlled chemical composition phenolic resin and a catalyst, subjected to a molding process, later proceeding, before its final sintering, to the extraction of the thermostable vehicle during which takes place a contribution of carbon and/or nitrogen to the compact resulting from the sintering.

**2.-** Process for the obtention of green compacts for its later sintering, according to the first claim, characterized in that the amount of phenolic resin present in the mixture prepared with the ceramic and/or metal dusts is not greater than 40% of the total volume of said mixture.

**3.-** Process for the obtention of green compacts for its later sintering, according to the preceding claims, characterized in that the organic vehicle extraction process is effected thermically through a very slow warming up procedure (approximately 0.5°C per minute) up to a temperature of between 400 and 450°C under an inert atmosphere at a pressure between 1 mbar and 5 mbar.

**4.-** Process for the obtention of green compacts for its later sintering, according to the first claim, characterized in that the contribution of carbon and/or nitrogen or other elements take place homogeneously through the resulting part, essentially depending upon the chemical composition of the phenolic resin prepared in the initial mixture.

**5.-** Process for the obtention of green compacts for its later sintering, according the the preceding claims, characterized in that the reaction induced between the phenolic resin and the hexamethylenetetramine as catalyst, provoke a hardening of the molded mixture or green compact, allowing it to be easily taken off the mold.

**6.-** Process for the obtention of green compacts for its later sintering, according to the preceding claims, characterized in that the mixture molding temperature is determined by the relative quantity by volume of the phenolic resin, as well as by its own chemical composition.
